# EUROPEAN PATENT APPLICATION

(11) **EP 2 933 673 A1**
(43) Date of publication of application: **21.10.2015**
(21) Application number: 15163814.5
(22) Date of filing: 16.04.2015
(51) Int. Cl.: G02B 27/09, G02B 19/00

(54) **DEVICE FOR CREATION OF INTENSIVE FULL-COLOR LIGHT BEAM WITH CIRCULAR CROSS-SECTION, HOMOGENOUS LIGHT INTENSITY DISTRIBUTION AND BEAM DIVERGENCE FROM 0 TO 10°**

(30) Priority: 16.04.2014 SK 500412014 U
(71) Applicant: KVANT spol. s r.o., Kramare 83101 Bratislava 37 (SK)
(72) Inventor: Kubosek, Pavol, 83101 Bratislava 37 (SK); Dubec, Victor, 83101 Bratislava 37 (SK)
(74) Representative: Grünecker Patent- und Rechtsanwälte PartG mbB

(57) **Abstract**

The present invention relates to a device which comprises light source (ZS) consisting of at least two multimode laser diodes that generate light in the red (R), green (G) or blue (B) spectral region with the light intensity of each diode adjustable independently and with all beams merged by dichroic mirrors (DZ) into single collimated concentric beam with rectangular cross-section whose sides ratio is from 1:1 to 1:1.5.

Such laser beam passes through the optical system (OS) that comprises lens (S) and achromatic optical doublet (OD), whose focal distance is greater than that of the lens (S), illuminating at least 90% of the area of the optical doublet (OD) thus forming full color light beam with low divergence, circular cross-section and homogenous light intensity distribution. The main advantage of the invention is simultaneous achievement of low divergent beam (0° to 10°) with homogenous light intensity distribution, sharp edges, high efficiency (25%), long lifetime (20 000 hours), high output power (tens to hundreds watts) and smooth full color mixing.

## Description

### BACKGROUND OF THE INVENTION

Currently intensive beams of light with circular cross-section are usually created by light of fluorescent vapor lamps, incandescent bulbs or LEDs (light emitting diodes) focused by one or more lenses.

The main disadvantage of these devices is their disability to achieve intensive full-color light beam with low divergence along with high-efficient conversion of electricity to light, homogenous distribution of light intensity, sharp edges, sooth color mixing, high intensity and long lifetime.

While LEDs have high efficiency, smooth color mixing and their lifetime reaches 20 000 hours, their beam divergence is rarely below 10° and their radial intensity quickly declines.

Incandescent light bulb and fluorescent vapor lamp can achieve 1° beam divergence, however losing more than 50% of original power due to cropping. Further, these two light sources do not allow smooth color mixing, produce much heat and demand adjustments of lenses for every desired distance to achieve homogenous light intensity distribution.

As opposed to mentioned light sources, lasers, especially diode lasers, can achieve all desired properties of light beam. They naturally have low divergence, long lifetime and high efficiency. Multiple wavelengths can be combined into single beam accomplishing smooth color mixing. As was described in the European patent EP 2 043 211 B1, beams of multiple laser diodes can be aligned parallel close to each other by mirrors achieving single intensive beam in the distance. However, currently no device achieving homogenous light intensity distribution with circular cross-section and sharp edges is known.

### SUMMARY OF THE INVENTION

Listed disadvantages are significantly addressed by the presented invention, as defined by the independent claim.

In particular, a device is provided for creation of intensive full-color light beam with circular cross-section, homogenous light intensity distribution and beam divergence from 0 to 10°. The device uses powerful multimode laser diodes with adjustable light intensity generating in the red, green and blue spectral regions with at least one diode generating in each spectral region.

The red, green and blue colors are sufficient for creation of white light and wide variety of other colors. Just two laser diodes are sufficient for creation of a light beam with circular cross-section, sharp edges and homogenous light intensity distribution. However, such solution would not be able to create full color spectrum.

The light of the multimode laser diodes is collimated by an optical system comprising at least one lens and at least one optical doublet with the focal length longer then the focal length of the lens. The light of the diodes illuminates at least 90% of the area of the optical doublet. The distance between the lens and the optical doublet is shorter or equal to the sum of their focal distances. The light source comprises planar dichroic optical elements merging light beams with various wavelengths (colors) into single multicolor concentric beam. Each single color beam is concentric with the resulting multicolor beam. The light of each multimode laser diode is precolimated by aspheric lenses. There is at least one aspheric lens for each diode.

The desired divergence 0° of the resulting beam is achieved only if the foci of the lens and the optical doublet overlap.

The divergence and the color of the resulting beam can be adjusted continuously by adjusting the distance between the lens and the optical doublet.

The light beam entering the optical system can have rectangular cross-section with the sides ratio from 1:1 to 1:1.5.

The circular aperture and the numerical aperture of the optical doublet can be greater than 0.2.

If the device comprises two or more laser diodes with equal wavelength, a polarization cube or a polarization mirror can be used for merging the beams of these diodes into single concentric beam. Polarization cube and polarization mirror are optical elements that transmit light with certain polarization and reflect light with polarization that is perpendicular to the former. If two beams with mutually perpendicular polarizations are incident on proper faces of a polarization cube or a polarization mirror, they merge into single non-polarized concentric beam. If the polarizations of these beams are parallel, an optical element able to rotate the polarization plane can be used to adjust the polarization of one of the beams such that it will be perpendicular to that of the other beam. Such optical elements comprise half-wave plates and optical rotators.

Any two or more light beams disregards of their polarizations can be merged by aligning them parallel close to each other by a system of mirrors.

If the resulting concentric laser beam has rectangular cross-section with sides ratio from 1:1 to 1:1.5, the width of the beam is properly adjusted by a telescope composed of cylindrical lenses or a pair of anamorphic prisms such that the sides ratio of the rectangular cross-section of the resulting beam will be from 1:1 to 1:1.5.

Such resulting beam further passes through the optical system composed of the lens and optical doublet with the focal length greater than that of the lens. After passing the lens the beam is divergent and has quasi square cross-section due to lens errors. The beam illuminates at least 90% of the area of the optical doublet. Since the doublet has circular aperture, small part of the incident beam is cropped on the output (the part corresponding to the corners of the square but not all the way to the center of a side of the square).

It is important to illuminate at least 90% of the area of the optical doublet for the resulting beam to have homogenous light intensity distribution and sharp edges. Such illumination conditions are achieved by the selection of lens with sufficiently short focal distance, because the illuminated area is inversely proportional to the focal distance of the lens. The resulting beam achieves the desired properties after 1 to 10 meters and retains them even after several hundred meters.

Alternatively the circular cross-section of the resulting beam is attainable by embedding a circular aperture into the path of the beam between the lens and the optical doublet. This aperture has to be sufficiently small to crop the edges of the square cross-section beam to circular cross-section. Strictly speaking the edges have to be cropped all the way to the centers of the sides of the square. This way much more power is cropped than by cropping only small parts of the edges by the optical doublet. The distance between the lens and the optical doublet is chosen such that the foci of the lens and the optical doublet are close to each other so the resulting beam will have divergence close to 0°. By reducing the distance of these two elements the divergence grows to 10°. For every distance the condition of illuminating at least 90% of the area of the optical doublet must be preserved. After 1-10 meters the light intensity distribution of the resulting beam remains homogenous and the cross-section circular remains circular even after the distance between the lens and the optical doublet is changed.

If the numerical aperture of the optical doublet is greater than 0.1, spherical error occurs. It manifests by highlighted edge of the resulting beam. If the numerical aperture of the optical doublet is greater than 0.2, the condition of illuminating at least 90% of the area of the optical doublet need not tu be preserved and the circular cross-section of the resulting beam will be achieved thanks to the spherical error even without cropping of the edges of the incident beam.

The optical doublet is *used* in favor of a common lens because it corrects the chromatic error. If a common lens was *used,* the each of the beams with different wavelengths (colors) contained in the resulting beam would have different divergence.

The main advantage of the presented invention is the simultaneous achievement of low divergent beam (0° to 10°) with circular cross-section, sharp edges and homogenous light intensity distribution together with high energetic efficiency (25%), long lifetime (20 000 hours) and smooth color mixing.
- Fig. 1 to 4: show device for creation of intensive full-color light beam with circular cross-section, homogenous light intensity distribution and low beam divergence.
- Fig. 5: shows the cross-section of the beam resulting from the device according to the presented invention combined with the chart of light intensity in the cross-section.

### DETAILED DESCRIPTION

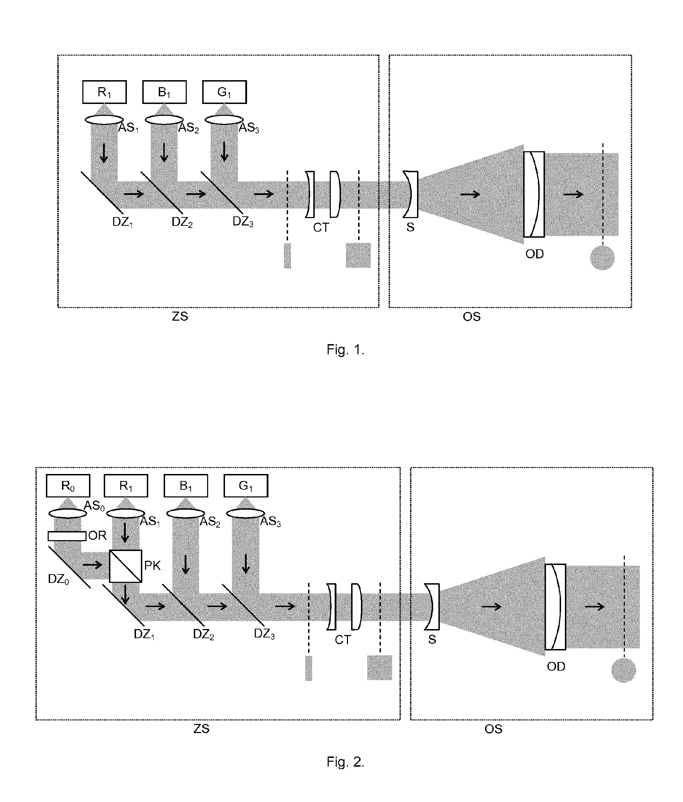

The Fig. 1 shows a device which uses three multimode laser diodes as its light source. One of the diodes (R₁) generates 700mW of red light, second (G₁) generates 1W of green light and the third (B₁) generates 1.5W of blue light. Each laser beam of these diodes is collimated by one of the aspherical lenses (AS) with focal length 4.6 mm. Each resulting beam has an elliptical cross-section with dimensions approximately 1.2x5 mm. The resulting beams are merged into single concentric beam by three dichroic mirrors (DZ). A telescope (CT) is placed in the path of the resulting concentric beam. The telescope (CT) is composed of two cylindrical lenses with focal distances -6.4 mm and 25 mm. The distance between the lenses of the telescope (CT) is 20+/-5 mm. The telescope (CT) adjusts width of the resulting concentric beam by ratio 1:3.9 while conserving the direction of the beam. The beam resulting from the telescope (CT) has square cross section with the dimensions 5x5 mm.

Such resulting beam passes through optical system (OS) composed of spherical concave lens (S) with focal distance -15 mm and spherical air-filled achromatic optical doublet (OS) with diameter 100 mm and focal distance 260 mm. These lenses are placed on the same axis with the laser beam resulting from the telescope (CT). The distance between the lens (S) and the optical doublet (OD) is approximately 249+/-10 mm. The beam resulting from the optical system (OS) has white color, diameter 100 mm and divergence 0°. All along the beam axis from 3 to 150 meters from the optical system (OS) the edges of the beam are sharp and the light intensity in the cross-section of the beam is homogenous. If the distance between the lens (S) and the doublet (OD) is shortened by 15 mm, the divergence of the resulting beam grows to 1°. By changing the light intensity of any laser diode in the source (ZS) the color of the resulting beam is smoothly changed without any effect on its diameter of divergence. By turning off two of the three diodes monochromatic light beam is achieved without any effect on its diameter of divergence.

The lens (S) from the Fig. 1 can be replaced by concave lens with focal distance 20 mm and the distance between the lens (S) and the optical doublet (OD) can be changed to 150 mm. After these changes the divergence of the resulting beam is 10°.

The lens (S) from the Fig. 1 can be replaced by convex lens with focal distance 25 mm and the distance between the lens (S) and the optical doublet (OD) can be changed to 280+/-10 mm. After these changes the divergence of the resulting beam is 0°.

The optical doublet (OD) from the Fig. 1 can be replaced by cemented optical doublet with focal distance 50 mm and diameter 30 mm and the distance between the lens (S) and the optical doublet (OD) can be changed to 35+/-5 mm. After these changes the divergence of the resulting beam is 0.2°.

The device in the Fig. 2 is identical with the device in the Fig. 1 to the point that following elements were added: (R₀), (AS₀) and (DZ₀) that are identical with (R₁), (AS₁) and (DZ₁); (OR) and (PK). The beams of the diodes (R₀) and (R₁) are aligned closely and parallel and they are collimated by aspherical lenses (AS₀) and (AS₁). After passing through the lens (AS₁) the beam of the diode (R₁) passes through the polarization cube (PK) without being affected. After passing through the lens (AS₀) the beam of the diode (R₀) passes optical polarization rotator (OR) that rotates the polarization plane of the beam by 90°. After that the beam is reflected by the mirror (DZ₀) to the polarization cube (PK) and due to rotated polarization of the beam the beam is again reflected merging with the beam of the diode (R₁) into single concentric beam. As opposed to the device in the Fig. 1 the resulting beam has twofold power in the red spectral region.

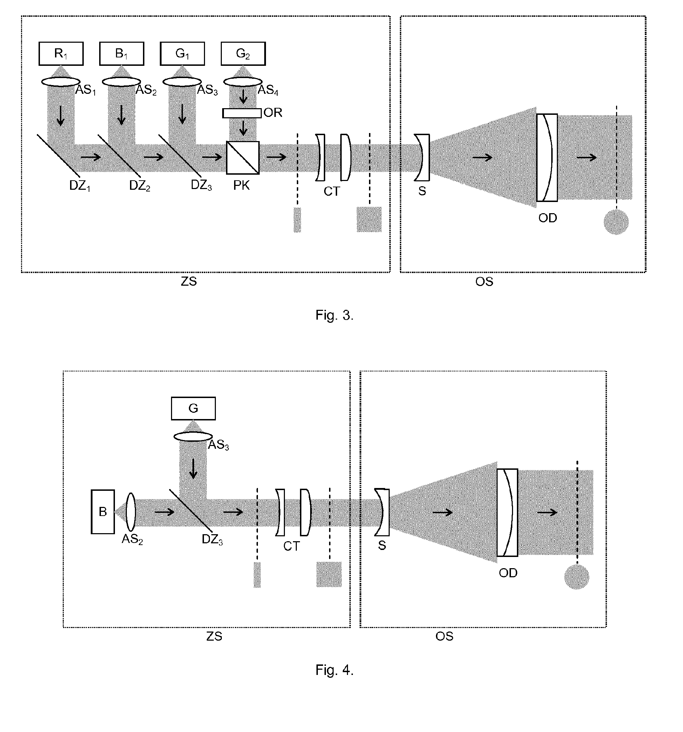

The device in the Fig. 3 is identical with the device in the Fig. 1 to the point that the following elements were added: (G₂) and (AS₄) that are identical with (G₁) and (AS₃); (OR) and (PK). Equally to the Fig. 1 the laser beams of the diodes (R₁), (B₁) and (G₁) collimated by aspherical lenses (AS) merge on the dichroic filters (DZ). Subsequently the merged beam passes polarization cube (PK) without being affected because the light of these laser diodes is polarized respectively. The beam (G₁) collimated by the aspherical lens (AS₄) passes through the optical rotator (OR) that rotates its polarization plane perpendicularly. After incidence to the polarization cube (PK) the beam is reflected parallel and concentric with the beams of the diodes (R₁), (B₁) and (G₁).

The device in the Fig. 4 is identical with the device in the Fig. 1 to the point that elements (R₁), (AS₁), (DZ₁) and (DZ₂) are removed and elements (B₁) and (AS₂) are placed such that the beam of the diode (B₁) is transmits through the mirror (DZ₃) and merges with the beam of the diode (G₁) that reflects from the other side of the mirror (DZ₃). Since a red diode is missing in this configuration, the color spectrum of the resulting beam is limited to combinations of blue and green. However, geometrical properties of the resulting beam are identical with that of the resulting beam of device in the Fig. 1.

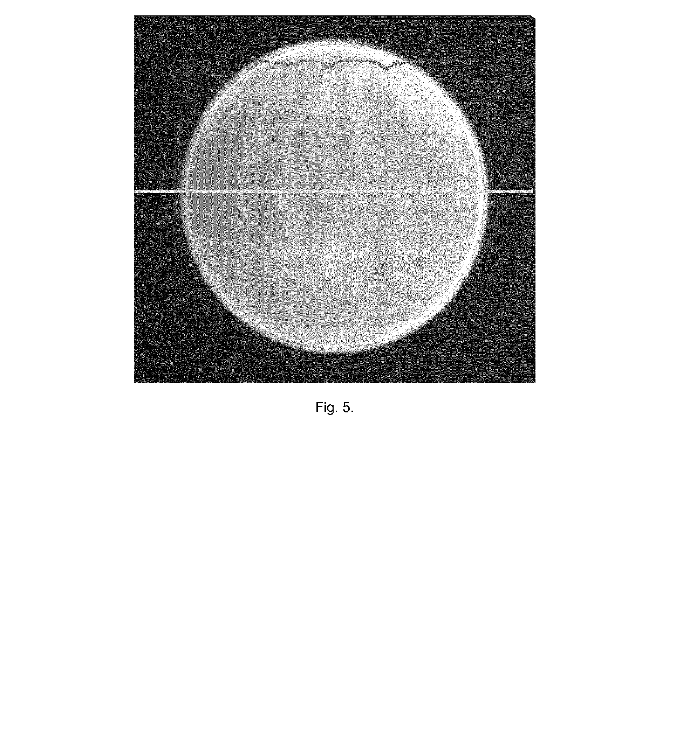

The Fig. 5 shows the cross-section of the resulting beam of the device in the Fig. 2., where following laser light sources were used: two laser diodes with power 700 mW emitting in the red spectral region, one with power 1 W emitting in the green spectral region and one with power 3.5 W emitting in the blue spectral region. The polarization of the beam of one of the red diodes is rotated by 90° by a polarization rotator and then merged by a polarization cube with the beam of the second red diode into single concentric beam. The divergence of the final resulting beam is 0.1°. The green curve represents the light intensity through the region indicated by the red line.

The device in the Fig. 1 creates intensive light beam with circular cross-section, homogenous light intensity distribution, small divergence 0-10°, characterized in that the source of light is a system of powerful multimode laser diodes; lenses are used for collimating the beams of the diodes; dichroic mirrors, polarization cubes and polarization rotators are used for merging the beams of the diodes; the resulting beam has rectangular cross section with sides ratio from 1:1 to 1:1.5; the resulting beam passes through optical system (OS) that comprises at least one lens (S) and optical doublet (OD) whose focal length is longer than the focal length of the lens (S) and whose distance from the lens (S) is such that the focal lengths of the lens (S) and the optical doublet (OD) lie in close proximity to each other for near 0° divergence of the resulting beam to be achieved; the optical doublet (OD) is illuminated to the edges such that only small parts of the incident beam are cut off.

It is useful to equip the device with the possibility to continually change the distance between the lens (S) and the optical doublet (OD). This way continuous change of the resulting beam divergence is achieved. Either the lens (S) or the doublet (OD) or both of them can be movable along the main optical axis of the system (OS). The device can be also equipped with user-friendly controls for the lens-doublet distance change. Other controls can change light intensity of the laser diodes for continuous color mixing to be achieved.

In summary, according to an aspect of the present invention, an apparatus is provided for generating an intense colour light beam with a circular cross-section, with a homogenous intensity distribution and with a low divergence from 0° to 10°. The device comprises or consists of a light source (ZS) including at least two multi-mode laser diods (R, G, B) of different respective colours and optical elements (AS, DZ, PK, OR, CT) for forming a collimated light beam out of partial beams generated by the laser diodes (R, G, B). The device further comprises an optical arrangement (optical system, OS) which includes at least one lens (S) and at least one optical doublet (OD) with a focal length longer than the focal length of the lens (S), which are located in mutual distance smaller than or equal to a sum of their respective focal lengths. The light source (ZS) and the optical arrangement (OS) are arranged in such a manner that the light beam illuminates at least 90% of the area of the optival doublet (OD). Presented invention is useful in lighting of theatres, concert halls, various exterior happenings, big stadiums. The device is especially useful in occasions where there is big distance between the lighting equipment and the desired spot. The spot is always illuminated well because of the low divergence of the device. Big energy efficiency is advantageous in occasions where only fuel cells supply the energy or in small interiors where ineffective light sources generate significant excess heat. If effect elements like shapes, diffracting structures are placed before the optical doublet various shapes or splitting of the output beam is achievable. The invented device is useful everywhere where laser beam with homogenous light intensity distribution, circular cross section, sharp edges and small divergence is desired.

### ABBREVIATIONS LIST

- light source - ZS
- multimode laser diodes - R, G, B
- aspherical lenses -AS₀, AS₁, AS₂, AS₃
- polarisation rotator - OR
- polarisation cube - PK
- dichroic mirror/ planar dichroic optics - DZ
- telescope - CT
- optical system - OS
- lens - S
- optical doublet - OD

## Claims

1. A device for creation of intensive colorful light beam with circular cross-section, homogenous light intensity distribution and small divergence from 0° to 10° **characterized in that** it is composed of:
• light source (ZS) comprising
o at least two multimode laser diodes (R, G, B) for generation of light beams of various color,
∘ optical elements: aspherical lenses (AS) and dichroic mirrors (DZ) for merging individual laser beams generated by multimode laser diodes (R, G, B) into single collimated light beam and
o telescope (CT) for setting desired width of the beam resulting from the light source (ZS) and
• optical system (OS) connected to the light source (ZS) comprising
o at least one lens (S) for diversion of the beam entering the optical system (OS) from the light source (ZS) placed on the optical axis of the beam and
o at least one optical doublet (OD) arranged to be illuminated by the beam resulting from the lens (S)
wherein the light source (ZS) and the optical system (OS) are arranged such that the light beam incident to the optical doublet (OD) illuminates at least 90% of its area, the focal length of the optical doublet (OD) is greater than that of the lens (S) and the distance between the lens (S) and the optical doublet (OD) is shorter or equal to the sum of their focal distances.

2. The device according to claim 1 **characterized in that** the source of the light (ZS) comprises planar dichroic optical elements (DZ) for merging of light beams with different colors (wavelengths) into single concentric resulting light beam.

3. The device according to claim 1 **characterized in that** the source of light (ZS) comprises laser diodes (R, G, B) generating in the red, green and blue spectral region with at least one diode generating in each region.

4. The device according to claim 1 **characterized in that** the source of light (ZS) comprises aspherical lenses (AS₁), (AS₂) and (AS₃), each lens for one of the laser diodes (R, G, B) for collimation of the light beams of the diodes

5. The device according to claim 1 **characterized in that** the source of light (ZS) comprises at least two of the laser diodes (R, G, B) with equal color (wavelength), of which light beams are merged by polarization cube (PK) after collimation by aspherical lenses (AS₁) and (AS₂).

6. The device according to claim 1 **characterized in that** the divergence of the resulting light beam is adjustable from 0° to 10° by altering the distance between the lens (S) and the optical doublet (OD).

7. The device according to claim 1 **characterized in that** the light intensity of each of the diodes (R, G, B) and the color of the resulting light beam are continually adjustable.

8. The device according to claim 1 **characterized in that** the light beam entering the optical system (OS) has rectangular cross section with the sides ration from 1:1 to 1:5.

9. The device according to claim 1 **characterized in that** the lens (S) is an aspherical concave lens (AS).

10. The device according to claim 1 **characterized in that** the optical doublet (OD) has a circular aperture.

11. The device according to claim 1 **characterized in that** the numerical aperture of the optical doublet (OD) is greater than 0.2.

12. The device according to claim 1 **characterized in that** between an aspherical lens (AS) and the polarization cube (PK) optical polarization rotator (OR) is placed rotating the polarization plane of laser beam collimated by the aspherical lens (AS).
